(19) Europäisches Patentamt
European Patent Office
Office européen des brevets

(11) EP 0 584 570 B1

(12) EUROPÄISCHE PATENTSCHRIFT

(45) Veröffentlichungstag und Bekanntmachung des Hinweises auf die Patenterteilung:
**30.09.1998 Patentblatt 1998/40**

(51) Int Cl.[6]: **C08G 59/68**, C08G 65/10

(21) Anmeldenummer: **93112083.6**

(22) Anmeldetag: **28.07.1993**

(54) **Epoxidharzzusammensetzung mit Sulfoniumsalzen**

Epoxy resin composition containing sulphonium salts

Composition de résine époxy contenant des sels de sulphonium

(84) Benannte Vertragsstaaten:
**AT DE FR GB IT NL SE**

(30) Priorität: **10.08.1992 DE 4226444**

(43) Veröffentlichungstag der Anmeldung:
**02.03.1994 Patentblatt 1994/09**

(73) Patentinhaber: **SIEMENS AKTIENGESELLSCHAFT**
**80333 München (DE)**

(72) Erfinder:
- **Stapp, Bernhard, Dr. Dipl.-Chem.**
  **Issaquah, WA 98027 (US)**
- **Schön, Lothar, Dipl.-Ing. (FH)**
  **D-91077 Neunkirchen am Brand (DE)**
- **Muhrer, Volker, Dipl.-Ing. (FH)**
  **D-90431 Nürnberg (DE)**

(56) Entgegenhaltungen:
**EP-A- 0 011 918** **EP-A- 0 369 194**
**US-A- 4 442 197**

- **J. APP. POLYM. SCI. Bd. 32, Nr. 7 , 20. November 1986 , NEW YORK ,USA Seiten 5727 - 5732 MORIO K. ET AL 'Thermoinitiated cationic polymerization of epoxy resins by sulphonium salts'**
- **ADV. POLYM. SCI. Bd. 62 , 1984 Seiten 1 - 48 CRIVELLO J.V. 'Cationic polymerization'**

EP 0 584 570 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft eine härtbare Reaktionsharzmischung sowie deren Verwendung.

Als Reaktionsharze zur Beschichtung bzw. Verklebung von elektronischen Bauelementen und Baugruppen dienen vielfach Epoxidharze, die gehärtet werden. Die Härtung von Reaktionsharzmischungen auf Epoxidharzbasis kann - bei Anwesenheit geeigneter Beschleuniger bzw. Initiatoren - sowohl thermisch als auch durch UV-Strahlung aktiviert werden. Bekannte Initiatoren für die Härtung nach einem kationischen Mechanismus sind Sulfoniumsalze, die - in Abhängigkeit von der chemischen Konstitution - die initiierenden Spezies durch thermische oder photochemische Aktivierung bilden.

Thermisch aktivierbare Sulfoniumsalze sind beispielsweise in "J. Polym. Sci. Polym. Chem. Ed.", Vol. 29 (1991), Seiten 1535 bis 1543 beschrieben. Von besonderem technischen Interesse sind Benzylthiolaniumsalze mit für die kationische Polymerisation geeigneten nicht-nucleophilen Anionen, wie $PF_6^-$, $SbF_6^-$ und $BF_4^-$ (siehe dazu: JP-OS 58-37003 bzw. "Chemical Abstracts", Vol. 99 (1983), No. 141034v und "J. Appl. Polym. Sci.", Vol. 32 (1986), Seiten 5727 bis 5732). Diese Verbindungen zeigen in vielen kationisch polymerisierbaren Reaktionsharzmischungen eine bei Raumtemperatur ausreichende Latenz, d.h. Formulierungen, die Benzylthiolaniumsalze als Härtungsinitiatoren enthalten, sind lagerstabil. In der EP-0S 0 379 464 sind araliphatische Sulfoniumsalze, wie Diethylbenzylsulfoniumhexafluoroantimonat, beschrieben, die sich ebenfalls als latente Härtungsinitiatoren eignen sollen. Die genannten Sulfoniumsalz-Verbindungen eignen sich aber nur für die thermisch aktivierte Härtung von kationisch polymerisierbaren Verbindungen.

Es ist ferner bekannt, daß die UV-Härtung von kationisch polymerisierbaren Verbindungen durch Triarylsulfoniumsalze initiiert werden kann (siehe dazu beispielsweise US-PS 4 058 401 und US-PS 4 138 255). Ein wesentliches Merkmal von Triarylsulfoniumsalzen ist die hohe thermische Stabilität (siehe dazu: "Adv. Polym. Sci.", Vol. 62 (1984), Seiten 1 bis 48). Dies bedeutet aber, daß Triarylsulfoniumsalze für die thermische Härtung von kationisch polymerisierbaren Verbindungen ungeeignet sind.

Für die kombinierte thermische und UV-Härtung von kationisch polymerisierbaren Verbindungen, die technisch wünschenswert ist, sind Sulfoniumsalze bekannt, die thermisch und photochemisch aktivierbar sind. Diese Eigenschaften weisen heterocyclische, arylsubstituierte oder mit einem Arylsystem anellierte Sulfoniumsalze auf (siehe dazu WO 90/11303) sowie Phenylbenzylalkylsulfoniumsalze (siehe EP-0S 0 331 496) und Naphthalinsulfoniumsalze (siehe JP-0S 63-152619 bzw. "Chemical Abstracts", Vol. 109 (1988), No. 232200n). Die technische Anwendbarkeit von vielen dieser Verbindungen wird jedoch durch eine Reihe von Nachteilen deutlich eingeschränkt. Hierzu gehört insbesondere die häufig zu geringe Löslichkeit in technisch brauchbaren Formulierungen und die häufig zu geringe UV-Absorption oberhalb von 315 nm, was dazu führt, daß die UV-A-Strahlung der vornehmlich zur UV-Härtung eingesetzten Quecksilberstrahler nicht effektiv absorbiert wird. Eine Härtungsinitiierung mit UV-A-Strahlung ist insbesondere aber bei dikken Schichten wünschenswert, da dadurch eine höhere Eindringtiefe erreicht wird und geringere Streuverluste auftreten. Darüber hinaus kann auch aus Gründen des Arbeitsschutzes eine Härtung mit UV-A-Strahlung wünschenswert sein, da diese Strahlung - im Vergleich zu UV-B- und UV-C-Strahlung - eine deutlich geringere photobiologische Wirkung ausübt.

Es ist eine technisch-wirtschaftlich wichtige Aufgabe, beispielsweise auf dem Gebiet der Elektronik, eine einkomponentig lagerstabile, kationisch polymerisierbare Reaktionsharzmischung durch UV-Strahlung und durch Erhitzen zu härten. So ist eine kombinierte Härtung bei der Beschichtung (Lackieren, Abdecken, Umhüllen) und Verklebung von elektronischen Bauelementen und Baugruppen immer dann notwendig, wenn lichtabgeschattete Bereiche vorliegen, in denen das Reaktionsharz von der UV-Strahlung nicht erfaßt werden kann und somit thermisch gehärtet werden muß. Eine kombinierte Härtung ist aber auch dann erforderlich, wenn die Reaktionsharzmischung aus technischen Gründen Zusatzstoffe, wie Füllstoffe, Pigmente und Farbstoffe, enthält oder auch Harzkomponenten, welche die UV-Strahlung in den oberen Schichten so stark absorbieren oder streuen, daß in den tieferen Schichten keine ausreichende UV-Intensität mehr vorhanden ist. Dies ist beispielsweise bei der lokalen Abdeckung ungehäuster IC's auf Hybridschaltungen mittels eines Reaktionsharztropfens der Fall.

Aufgabe der Erfindung ist es, kationisch härtbare Reaktionsharzmischungen auf Epoxidbasis bereitzustellen, die gut lagerfähig und gut handhabbar sind, und zwar als Einkomponentensysteme, und die durch UV-Strahlung, insbesondere im UV-A-Bereich von 315 bis 400 nm, una bei Temperaturen über 80°C rasch härten.

Dies wird erfindungsgemäß durch Reaktionsharzmischungen erreicht, die folgende Komponenten enthalten:

- ein kationisch polymerisierbares Epoxidharz,
- einen latenten Härtungsinitiator der Struktur

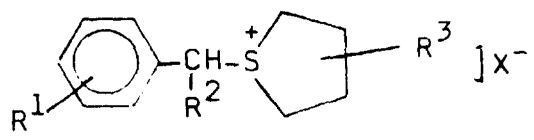

(1)

wobei folgendes gilt:

$R^1$ = Wasserstoff, Alkyl, Aryl, O-Alkyl, S-Alkyl, Vinyl, $CF_3$, Halogen, CN, $NO_2$ oder ein anelliertes aromatisches System,
$R^2$ = Wasserstoff, Alkyl oder Aryl,
$R^3$ = Wasserstoff, Alkyl oder Aryl oder der Thiolanring ist Bestandteil eines aromatischen Systems,
$X^-$ = $PF_6^-$, $AsF_6^-$, $SbF_6^-$ oder $SbF_5OH^-$, und

- einen Sensibilisator der Struktur

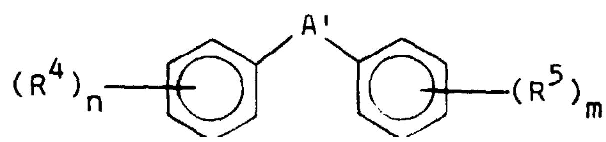

(2)

mit A' = -CO-, -CO-CO-,

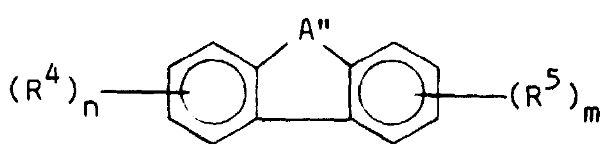

(3)

mit A" = -CO-, -NH-, -CO-CO-, oder

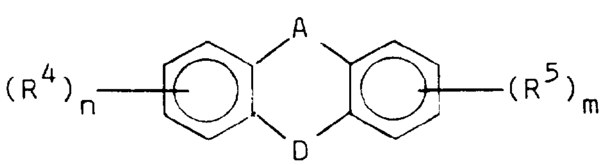

(4)

mit A = -CO- und D = -O-, -S-, -CO-, $-(CH_2)_x-$ mit x = 1 oder 2,
bzw. A = -NR- und D = -O-(R = H), -S-(R = H oder $CH_3$), -CO- (R = H),
wobei folgendes gilt:

$R^4$ und $R^5$ = Wasserstoff, Alkyl, Aryl, Aralkyl, O-Alkyl, S-Alkyl, COO-Alkyl, $N(Alkyl)_2$, Halogen, OH oder CN, und
n und m = 0, 1, 2 oder 3,

mit der Maßgabe, daß bei Carbazol, Phenoxazin und Acridinon die unsubstituierte Verbindung und bei Phenothiazin die unsubstituierte Verbindung sowie das N-Methyl-, 2-Phenyl-, 2-Methoxy- und 2-Acetyl derivat vorliegt.

Überraschenderweise hat sich nämlich gezeigt, daß die in den erfindungsgemäßen Reaktionsharzmischungen enthaltenen speziellen Sensibilisatoren, die im UV absorbieren, in der Lage sind, die bei der UV-Absorption aufgenommene Energie auf die Härtungsinitiatoren zu übertragen und so aktive Spezies zu bilden, die ihrerseits eine kationische Polymerisation auslösen. Es war auch nicht vorhersehbar, daß gerade diese Verbindungen aus der großen Palette bekannter Sensibilisatoren und Farbstoffe eine sensibilisierende Wirkung auf die speziellen Härtungsinitiatoren zeigen, dabei aber die Lagerstabilität der Reaktionsharzmischungen nicht herabsetzen und auch keine retardierende Wirkung auf den kationischen Härtungsprozeß ausüben.

Als kationisch polymerisierbare Epoxidharze finden in den erfindungsgemäßen Reaktionsharzmischungen vorzugsweise Glycidylether auf der Basis von Bisphenol A, Bisphenol F oder Novolaken Verwendung; geeignet sind beispielsweise aber auch Glycidylether von Glycerin und Pentaerythrit.

Ferner werden lineare aliphatische Epoxidharze, wie epoxidiertes Polybutadien und epoxidiertes Sojabohnenöl, und cycloaliphatische Epoxidharze, beispielsweise 3,4-Epoxycyclohexylmethyl-3',4'-epoxycyclohexancarboxylat, bevorzugt. Letztere zeichnen sich insbesondere durch eine hohe Reaktivität sowie eine niedrige Viskosität aus. Ferner können auch Mischungen kationisch härtbarer Epoxidharze eingesetzt werden.

Zur Erhöhung der Härtungsgeschwindigkeit und zur Verbesserung der mechanischen Formstoffeigenschaften können den Reaktionsharzmischungen vorteilhaft hydroxylgruppenhaltige organische Verbindungen zugesetzt werden, d.h. Hydroxyl- bzw. Polyhydroxylverbindungen, sowie deren Vinylether. Als hydroxylgruppenhaltige Verbindungen dienen vorzugsweise Polyoxyalkylenpolyole, Polyalkylenpolyole und cycloaliphatische Hydroxylverbindungen. Neben Vinylethern der genannten Art können auch andere vinylgruppenhaltige Verbindungen zum Einsatz gelangen.

Der latente Härtungsinitiator ist ein Aralkylthiolaniumsalz der Struktur (1). Bevorzugt wird dabei ein Benzylthiolanium-Hexafluoroantimonat eingesetzt, d.h. eine Verbindung der Struktur (1), wobei $R^2$ und $R^3$ jeweils Wasserstoff ist und $X^-$ für $SbF_6^-$ steht. Die Aralkylthiolaniumsalze finden in einer Konzentration von 0,01 bis 5 % Verwendung, bevorzugt in einer Konzentration von 0,05 bis 3 %, jeweils bezogen auf das Epoxidharz.

Der Sensibilisator, der im UV-A-Bereich absorbiert, ist eine Verbindung der Struktur (2), (3) oder (4). Bevorzugte Sensibilisatoren sind:

- Benzophenone, d.h. Verbindungen der Struktur (2) mit A' = -CO-, wie unsubstituiertes Benzophenon sowie 4-Phenyl-, 4,4'-Dimethyl- und 4,4'-Bis(dimethylamino)-benzophenon (Michlers Keton); besonders bevorzugt ist 4-Phenylbenzophenon.
- Phenanthrenchinone, d.h. Verbindungen der Struktur (3) mit A" = -CO-CO-, wie unsubstituiertes Phenanthrenchinon sowie l-Chlorphenanthrenchinon; besonders bevorzugt ist die unsubstituierte Verbindung.
- Thioxanthone, d.h. Verbindungen der Struktur (4) mit A = -CO- und D = -S-, wie unsubstituiertes Thioxanthon sowie 2-Isopropyl-, 2,4-Dimethyl- und 2,4-Dichlorthioxanthon; besonders bevorzugt ist die unsubstituierte Verbindung und 2-Isopropylthioxanthon.
- Phenothiazine, d.h. Verbindungen der Struktur (4) mit A = -NR- gemäß Anspruch 1 und D = -S-, d.h. unsubstituiertes Phenothiazin sowie N-Methyl-, 2-Phenyl-, 2-Methoxy- und 2-Acetylphenothiazin; besonders bevorzugt ist N-Methylphenothiazin.

Als Sensibilisatoren können ferner folgende Verbindungen bzw. Derivate davon dienen: Benzil, Fluorenon, Carbazol, Xanthon, Phenoxazin, Anthrachinon, Acridinon, Anthron und Dibenzosuberon. Die Sensibilisatoren finden in einer Konzentration von 0,01 bis 5 % Verwendung, bevorzugt in einer Konzentration von 0,05 bis 2 %, jeweils bezogen auf das Epoxidharz. Die eingesetzte Menge ist insbesondere von der Dicke der zu härtenden Schicht, dem Extinktionskoeffizienten des eingesetzten Sensibilisators und der UV-Strahlungsquelle abhängig und wird erforderlichenfalls experimentell bestimmt.

Die Reaktionsharzmischungen nach der Erfindung sind einkomponentige, bei Raumtemperatur lagerstabile Mischungen. Eine hohe Lagerstabilität ist eine wesentliche Voraussetzung für die apparativ einfache Verarbeitung von Reaktionsharzmischungen. Die erfindungsgemäßen Reaktionsharzmischungen zeigen im allgemeinen eine für die Technik ausreichende Lagerstabilität. Jedoch kann es - je nach Zusammensetzung der Mischung - vorteilhaft sein, stabilisierende Komponenten zur weiteren Erhöhung der Lagerstabilität zuzusetzen. Als Stabilisatoren haben sich dabei tertiäre Amine als vorteilhaft erwiesen, die in einer Konzentration von 0,001 bis 1 %, vorzugsweise 0,01 bis 0,05 %, jeweils bezogen auf das Epoxidharz, eingesetzt werden. Als derartige tertiäre Amine werden Ethanolamine, wie Diisopropylaminoethanol und Triethanolamin, bevorzugt. Vorteilhaft können für den genannten Zweck aber auch (Meth) acrylate eingesetzt werden, und zwar in einer Konzentration von 1 bis 30 %, bezogen auf das Epoxidharz. Bevorzugt werden dabei Methacrylate, wie Polypropylenglykolmonomethacrylat. Verbindungen der genannten Art zeigen, bei der angegebenen Konzentration, eine hervorragende stabilisierende Wirkung, ohne jedoch die Reaktivität der Härtungsinitiatoren wesentlich zu beeinflussen.

Die erfindungsgemäßen Reaktionsharzmischungen können ferner auch bekannte Zusatzstoffe enthalten. Beispiele für derartige Zusatzstoffe sind mineralische und organische Füllstoffe sowie Additive, wie Thixotropiermittel, Entgasungshilfsmittel, Benetzungsmittel, Haftvermittler, Farbstoffe und Pigmente. Durch die Zusatzstoffe können die Eigenschaften der ungehärteten Mischungen bzw. die Formstoffeigenschaften verändert werden.

Die Reaktionsharzmischungen nach der Erfindung können durch ultraviolette Strahlung gehärtet werden. Als Bestrahlungsquellen kommen dabei prinzipiell alle UV-Quellen in Betracht, wie Xenon-, Wolfram-, Quecksilber- und Metallhalogenidstrahler sowie UV-Laser verschiedenster Art, beispielsweise Excimer- und Nd/YAG-Laser. Die UV-Emission der Strahler kann hierbei kontinuierlich oder gepulst erfolgen. Das Wellenlängenspektrum, mit dem die härtbaren Mischungen bestrahlt werden, ist abhängig von der Zusammensetzung der Mischung und wird von der jeweiligen

Anwendung bestimmt. Bevorzugt werden die Mischungen mit dem UV-A-Spektrum von Quecksilber-Mitteldruck- und -Hochdruckstrahlern gehärtet.

Die erfindungsgemäßen Reaktionsharzmischungen können auch thermisch rasch gehärtet werden, und zwar bereits bei niedrigen Temperaturen. Eine thermische Härtung neben der UV-Bestrahlung ist beispielsweise dann erforderlich, wenn elektronische Bauelemente und Baugruppen beschichtet oder verklebt werden, bei denen - konstruktiv bedingt - lichtabgeschattete Bereiche auftreten, und/oder dann, wenn die Eindringtiefe der UV-Strahlung in das Harz für eine vollständige Aushärtung zu gering ist. Dabei erfolgt die thermische Härtung gleichzeitig mit der UV-Bestrahlung, unmittelbar daran anschließend oder erst später in einem separaten Wärmeprozeß. Dies geschieht bei Temperaturen von 80 bis 200°C, vorzugsweise von 80 bis 150°C. Die zur thermischen Härtung erforderliche Wärme kann durch Infrarotstrahler, Infrarotlaser oder erwärmte Umluft zugeführt werden. Es ist aber auch möglich, den von einem UV-Strahler ausgesandten IR-Strahlungsanteil, wie es beispielsweise bei Quecksilber- und Xenonstrahlern der Fall ist, auszunutzen oder die von einer heißen Strahlerwandung konvektiv übertragene Wärme. Ferner ist es möglich, die erforderliche Wärme mittels Wärmeleitung über das Substrat oder durch die Bauteile zuzuführen.

Die Reaktionsharzmischungen nach der Erfindung eignen sich zur Beschichtung und Verklebung elektronischer Bauelemente und Baugruppen. Ferner können diese Mischungen als Klebstoffsysteme formuliert werden. In diesem Fall kann ein kombiniertes UV- und thermisches Härtungsverfahren vorteilhaft sein, bei dem der Klebstoff, nachdem er auf ein Substrat oder auf beide der zu verklebenden Substrate aufgebracht ist, eine begrenzte Zeit seine Klebrigkeit behält, wobei innerhalb dieser Zeit die zu verklebenden Substrate zusammengefügt werden. Die Härtung des bestrahlten Klebstoffes kann daran anschließend durch Wärmezufuhr vervollständigt werden. Dieses Verfahren ist besonders zur Verklebung nicht-transparenter Substrate geeignet.

Anhand von Ausführungsbeispielen soll die Erfindung noch näher erläutert werden (MT = Masseteile).

Beispiele 1 bis 10

Es wird eine Basismischung verwendet, die aus 62,5 MT eines cycloaliphatischen Epoxidharzes, 25 MT epoxidiertem Sojabohnenöl und 12,5 MT eines cycloaliphatischen Alkohols besteht. Dazu werden jeweils 0,5 MT Härtungsinitiator (als 33 %ige Lösung in Propylencarbonat) und gegebenenfalls 0,1 MT Sensibilisator zugegeben (siehe Tabelle 1) und unter Rühren bei Raumtemperatur gelöst. Als Härtungsinitiatoren werden folgende Benzylthiolanium-Hexafluoroantimonate eingesetzt, wobei es sich bei Verbindung (I) um ein Naphthylderivat handelt:

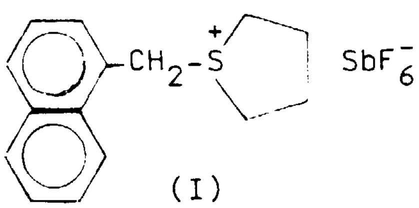

(I)

und

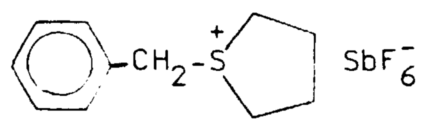

(II)

.

Die Reaktivität der Reaktionsharzmischungen unter UV-Bestrahlung bzw. bei Erwärmung wird - mittels der DSC-Methode (differential scanning calorimetry) - anhand der freiwerdenden Polymerisationswärme bestimmt (Gerät DSC-7, Fa. Perkin-Elmer, ausgestattet mit einem DPA-7 (double beam photocalorimetric accessory)). Die UV-Bestrahlung erfolgt bei 366 nm (200 W Hg/Xe-Strahler sowie Monochromator). 2 bis 3 mg der Mischungen werden jeweils in ein Aluminiumpfännchen eingewogen (Schichtdicke: ca. 80 pm) und in der Meßzelle des DSC-Gerätes 5 min mit UV-Licht bestrahlt. Die Bestrahlung erfolgt bei 40°C unter isothermen Bedingungen; die Leistungsdichte am Ort der Probe beträgt 3,5 $mW/cm^2$. Unmittelbar anschließend wird die Probe unter zeitlinearer Temperaturerhöhung mit 10 K/min auf 250°C erwärmt (dynamischer Lauf). Ein zweiter Meßlauf, unter den gleichen Bedingungen durchgeführt, wird vom ersten subtrahiert, um die durch die UV-Bestrahlung hervorgerufene Basislinienversetzung und die beim dynamischen Lauf auftretende Drift zu kompensieren. Aus dem isothermen Teil der Meßläufe wird die Zeit vom Beginn der UV-Bestrahlung bis zum Peakmaximum, die Peakhöhe und die während der UV-Bestrahlung freigesetzte Reaktionsenthalpie ($-\Delta H$) ausgewertet und aus dem dynamischen Teil der Meßläufe das Peakmaximum, die Peakhöhe und die während des dynamischen Laufes freigesetzte Polymerisationswärme ($-\Delta H$). Die Ergebnisse sind in Tabelle 1 zusammengefaßt.

Tabelle 1

| Bei-spiel | Ini-tiator | Sensibilisator | UV-Bestrahlung: Peak-maximum (min) | UV-Bestrahlung: Peakhöhe (W/g) | UV-Bestrahlung: - ΔH (J/g) | Dynamischer Lauf: Peak-maximum (°C) | Dynamischer Lauf: Peakhöhe (W/g) | Dynamischer Lauf: - ΔH (J/g) |
|---|---|---|---|---|---|---|---|---|
| 1 | I | Thioxanthon | 0,18 | 3,66 | 206 | 84/147 | 0,38/0,46 | 263 |
| 2 | I | Phenanthrenchinon | 0,84 | 1,43 | 198 | 80/149 | 0,37/0,55 | 280 |
| 3 | I | Dibenzosuberon | 0,63 | 0,48 | 113 | 131 | 1,42 | 339 |
| 4 | I | 4-Phenylbenzophenon | 0,27 | 1,46 | 183 | 86/143 | 0,34/0,47 | 282 |
| 5 | I | Phenothiazin | 0,23 | 1,99 | 209 | 70/147/191 | 0,18/0,6/0,35 | 270 |
| 6*) | I | ohne Sensibilisator | keine Reaktion | | | 130 | 2,6 | 480 |
| 7 | II | Michlers Keton | 1,05 | 0,54 | 131 | 170 | 0,8 | 373 |
| 8 | II | Phenanthrenchinon | 3,5 | 0,26 | 72 | 134 | 1,06 | 412 |
| 9 | II | Phenothiazin | 0,39 | 1,81 | 219 | 74/168 | 0,26/0,62 | 261 |
| 10*) | II | ohne Sensibilisator | keine Reaktion | | | 124 | 2,03 | 497 |

*) Vergleichsbeispiel

Wie Tabelle 1 entnommen werden kann, zeigen die Reaktionsharzmischungen nach der Erfindung (Beispiele 1 bis 5 und 7 bis 9) einen deutlichen Polymerisationswärmestrom, d.h. unter UV-Bestrahlung erfolgt eine Härtung der Mischungen. Dabei werden - je nach Sensibilisator und Härtungsinitiator - etwa zwischen 15 und 45 % der gesamten Polymerisationswärme gemessen. Demgegenüber erfolgt bei den Mischungen nach den Beispielen 6 und 10, die

keinen Sensibilisator enthalten, bei der UV-Bestrahlung keine Reaktion.

Beispiele 11 bis 16

Es wird dieselbe Basismischung verwendet wie bei den Beispielen 1 bis 10, und in gleicher Weise werden 0,5 MT Härtungsinitiator und gegebenenfalls 0,1 MT Sensibilisator zugemischt (siehe Tabelle 2). Als Härtungsinitiatoren werden folgende Benzylthiolanium-Hexafluoroantimonate eingesetzt:

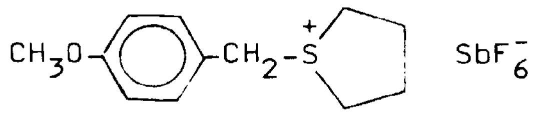

(III),

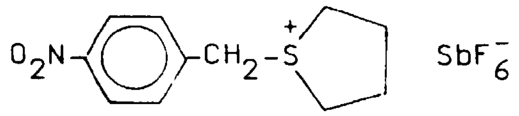

(IV)

und

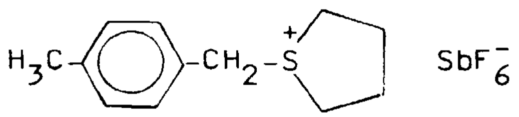

(V) .

Die fertigen Reaktionsharzmischungen werden jeweils in eine 0,5 mm tiefe Teflonform gegossen und mit UV-A-Licht > 320 nm bestrahlt (Hg-Metallhalogenidstrahler; Kantenfilter mit 99 % Absorption bei 320 nm); die Leistungsdichte im UV-A-Bereich beträgt am Ort der Probe 30 $mW/cm^2$. Nach 1 min, 3 min und 5 min werden die Mischungen qualitativ beurteilt. Die Ergebnisse sind in Tabelle 2 zusammengefaßt.

Wie aus Tabelle 2 ersichtlich, zeigen die Reaktionsharzmischungen nach der Erfindung (Beispiele 11, 13 und 15) eine ausgeprägte Reaktivität bei UV-Bestrahlung > 320 nm. Ohne den Sensibilisator, d.h. Phenothiazin (Beispiele 12, 14 und 16), wird dagegen in keinem Fall eine merkliche Veränderung des Ausgangszustandes erreicht.

Tabelle 2

| Beispiel | Initiator | Sensibilisator | UV-Bestrahlung 1 min | 3 min | 5 min |
|---|---|---|---|---|---|
| 11 | III | Phenothiazin | hochviskos | geliert | --- |
| 12 | III | --- | unverändert | unverändert | unverändert |
| 13 | IV | Phenothiazin | geliert | --- | --- |
| 14 | IV | --- | unverändert | unverändert | unverändert |
| 15 | V | Phenothiazin | geliert | --- | --- |
| 16 | V | --- | unverändert | unverändert | unverändert |

## Patentansprüche

**1.** Härtbare Reaktionsharzmischung, die folgende Komponenten enthält:

- ein kationisch polymerisierbares Epoxidharz,
- einen latenten Härtungsinitiator der Struktur

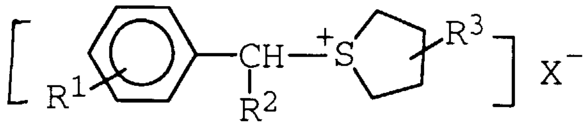

,

wobei folgendes gilt:

$R^1$ = Wasserstoff, Alkyl, Aryl, O-Alkyl, S-Alkyl, Vinyl, $CF_3$, Halogen, CN, $NO_2$ oder ein anelliertes aromatisches System,
$R^2$ = Wasserstoff, Alkyl oder Aryl,
$R^3$ = Wasserstoff, Alkyl oder Aryl oder der Thiolanring ist Bestandteil eines aromatischen Systems,
$X^-$ = $PF_6^-$, $AsF_6^-$, $SbF_6^-$ oder $SbF_5OH^-$, und

- einen Sensibilisator der Struktur

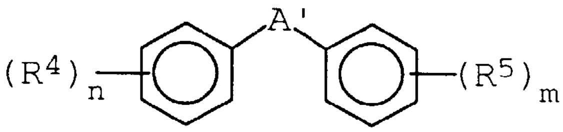

mit A' = -CO-, -CO-CO-,

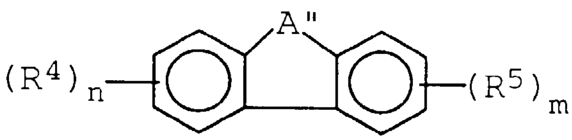

mit A" = -CO-, -NH-, -CO-CO-, oder

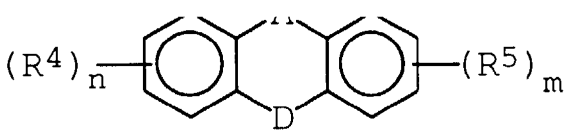

mit A = -CO- und D = -O-, -S-, -CO-, $-(CH_2)_x-$
mit x = 1 oder 2,
bzw. A = -NR- und D = -O- (R = H), -S- (R = H oder $CH_3$), -CO- (R = H),

wobei folgendes gilt:

$R^4$ und $R^5$ = Wasserstoff, Alkyl, Aryl, Aralkyl, O-Alkyl, S-Alkyl, COO-Alkyl, $N(Alkyl)_2$, Halogen, OH oder CN,
n und m = 0, 1, 2 oder 3,

mit der Maßgabe, daß bei Carbazol, Phenoxazin und Acridinon die unsubstituierte Verbindung und bei Phenothiazin die unsubstituierte Verbindung sowie das N-Methyl-, 2-Phenyl-, 2-Methoxy- und 2-Acetylderivat vorliegt.

2. Reaktionsharzmischung nach Anspruch 1, **dadurch gekennzeichnet,** daß das Epoxidharz ein Glycidylether auf Bisphenol A-, Bisphenol F- oder Novolak-Basis, ein lineares aliphatisches Epoxidharz oder ein cycloaliphatisches Epoxidharz ist.

3. Reaktionsharzmischung nach Anspruch 1 oder 2, **dadurch gekennzeichnet,** daß der Härtungsinitiator ein Benzylthiolanium- oder Naphthylmethylthiolanium-Hexafluorantimonat ist.

4. Reaktionsharzmischung nach einem der Ansprüche 1 bis 3, **dadurch gekennzeichnet,** daß der Anteil an Härtungsinitiator 0,01 bis 5 Masse-% beträgt, bezogen auf Epoxidharz.

5. Reaktionsharzmischung nach einem der Ansprüche 1 bis 4, **dadurch gekennzeichnet,** daß der Sensibilisator ein Benzophenon ist, insbesondere 4-Phenylbenzophenon.

6. Reaktionsharzmischung nach einem der Ansprüche 1 bis 4, **dadurch gekennzeichnet,** daß der Sensibilisator ein Phenanthrenchinon ist, insbesondere unsubstituiertes Phenanthrenchinon.

7. Reaktionsharzmischung nach einem der Ansprüche 1 bis 4, **dadurch gekennzeichnet,** daß der Sensibilisator ein Thioxanthon ist, insbesondere unsubstituiertes Thioxanthon und 2-Isopropylthioxanthon.

8. Reaktionsharzmischung nach einem der Ansprüche 1 bis 4, **dadurch gekennzeichnet,** daß der Sensibilisator ein Phenothiazin ist, insbesondere N-Methylphenothiazin.

9. Reaktionsharzmischung nach einem der Ansprüche 1 bis 8, **dadurch gekennzeichnet,** daß der Anteil an Sensibilisator 0,01 bis 5 Masse-% beträgt, bezogen auf Epoxidharz.

10. Reaktionsharzmischung nach einem der Ansprüche 1 bis 9, **dadurch gekennzeichnet,** daß sie eine hydroxylgruppenhaltige organische Verbindung, insbesondere ein Polyoxyalkylenpolyol, ein Polyalkylenpolyol oder eine cycloaliphatische Hydroxylverbindung, enthält oder deren Vinylether.

11. Verwendung der Reaktionsharzmischung nach einem oder mehreren der Ansprüche 1 bis 10 zur Beschichtung oder Verklebung von elektronischen Bauelementen und Baugruppen.

## Claims

1. Hardenable reaction resin mixture containing the following constituents:

- a cationically polymerizable epoxy resin,
- a latent hardening initiator of the structure

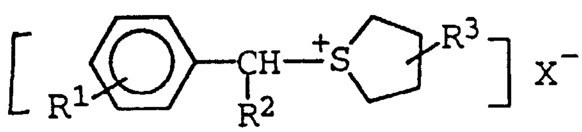

,

where the following applies:

$R^1$ = hydrogen, alkyl, aryl, O-alkyl, S-alkyl, vinyl, $CF_3$, halogen, CN, $NO_2$ or an anellated aromatic system,
$R^2$ = hydrogen, alkyl or aryl,
$R^3$ = hydrogen, alkyl or aryl or the thiolane ring is a constituent of an aromatic system.
$X^-$ = $PF_6^-$, $AsF_6^-$, $SbF_6^-$ or $SbF_5OH^-$, and

- a sensitizer of the structure

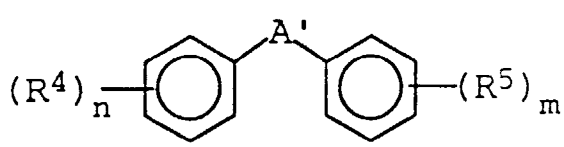

where A' = -CO-, -CO-CO-,

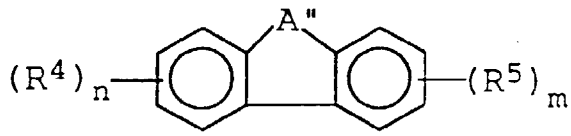

where A" = -CO-, -NH-, -CO-CO-, or

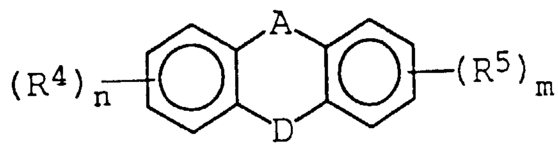

where A = -CO- and D = -O-, -S-, -CO-, $-(CH_2)_x-$
where x = 1 or 2,
or A = -NR- and D = -O- (R = H), -S- (R = H or $CH_3$), -CO- (R = H),
where the following applies:

$R^4$ and $R^5$ = hydrogen, alkyl, aryl, aralkyl, O-alkyl, S-alkyl, COO-alkyl, $N(alkyl)_2$, halogen, OH or CN,
n and m = 0, 1, 2 or 3,

providing that with carbazole, phenoxazine and acridinone the unsubstituted compound is present, and with phenothiazine the unsubstituted compound and the N-methyl-, 2-phenyl-, 2-methoxy- and 2-acetyl-derivative are present.

**2.** Reaction resin mixture according to claim 1, characterized in that the epoxy resin is a glycidyl ether on a bisphenol A, bisphenol F or novolak base, a linear aliphatic epoxy resin or a cycloaliphatic epoxy resin.

**3.** Reaction resin mixture according to claim 1 or 2, characterized in that the hardening initiator is a benzyl-thiolanium hexafluoroantimonate or a naphthylmethyl-thiolanium hexafluoroantimonate.

**4.** Reaction resin mixture according to one of claims 1 to 3, characterized in that the portion of hardening initiator amounts to 0.01 to 5 % by mass in relation to epoxy resin.

**5.** Reaction resin mixture according to one of claims 1 to 4, characterized in that the sensitizer is a benzophenone, in particular 4-phenyl-benzophenone.

**6.** Reaction resin mixture according to one of claims 1 to 4, characterized in that the sensitizer is a phenanthrenequinone, in particular unsubstituted phenanthrenequinone.

**7.** Reaction resin mixture according to one of claims 1 to 4, characterized in that the sensitizer is a thioxanthone, in particular unsubstituted thioxanthone and 2-isopropylthioxanthone.

**8.** Reaction resin mixture according to one of claims 1 to 4, characterized in that the sensitizer is a phenothiazine, in particular N-methyl-phenothiazine.

**9.** Reaction resin mixture according to one of claims 1 to 8, characterized in that the portion of sensitizer amounts to 0.01 to 5% by mass in relation to epoxy resin.

**10.** Reaction resin mixture according to one of claims 1 to 9, characterized in that it contains a hydroxyl-group-containing organic compound, in particular a polyoxyalkylene polyol, a polyalkylene polyol or a cycloaliphatic hydroxyl compound, or vinyl ethers thereof.

**11.** Use of the reaction resin mixture according to one or more of claims 1 to 10 to coat or bond electronic components and modules.

## Revendications

1. Mélange durcissable de résine de réaction, qui contient les composants ci-après:

   - une résine époxy polymérisable par voie cationique,
   - un initiateur latent du durcissement répondant à la structure:

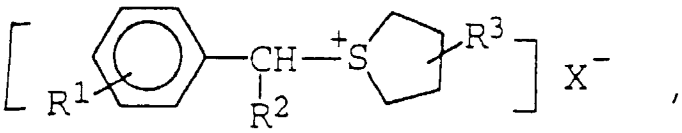

dans laquelle:

$R^1$ représente un atome d'hydrogène, un groupe alkyle, un groupe aryle, un groupe O-alkyle, un groupe S-alkyle, un groupe vinyle, un groupe $CF_3$, un atome d'halogène, un groupe CN, un groupe $NO_2$ ou encore un système aromatique condensé,
$R^2$ représente un atome d'hydrogène, un groupe alkyle ou un groupe aryle,
$R^3$ représente un atome d'hydrogène, un groupe alkyle ou un groupe aryle, ou encore le noyau thiolane est un constituant d'un système aromatique,
$X^-$ représente $PF^-_6$, $AsF^-_6$, $SbF^-_6$ ou $SbF_5OH^-$, et

   - un sensibilisateur répondant aux structures:

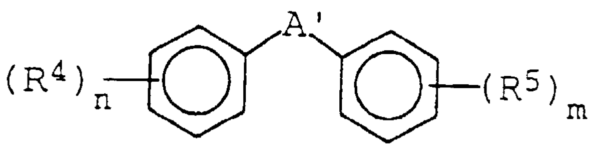

où A'= -CO-, -CO-CO-,

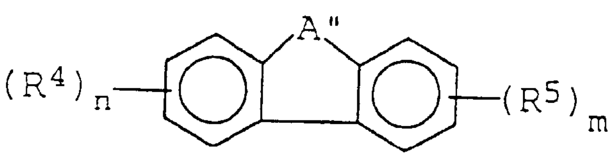

où A" = -CO-, -NH-, -CO-CO-, ou

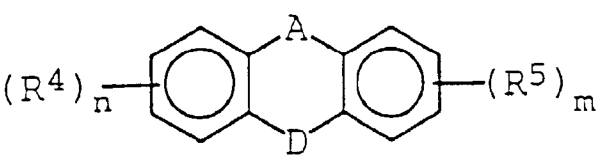

où A = -CO- et D = -O-, -S-, -CO-, $-(CH_2)_x-$
où x = 1 ou 2,
respectivement A = -NR- et D = -O- (R = H), -S- (R = H ou $CH_3$), -CO- (R = H),
dans lesquelles:

$R^4$ et $R^5$ représentent un atome d'hydrogène, un groupe alkyle, un groupe aryle, un groupe arylalkyle, un groupe O-alkyle, un groupe S-alkyle, un groupe COO-alkyle, un groupe $N(alkyle)_2$, un atome d'halogène, un groupe OH ou un groupe CN,

n et m représentent 0, 1, 2 ou 3,

avec cette mesure que, dans le cas du carbazole, de la phénoxazine et de l'acridinone, est présent le composé non substitué et, dans le cas de la phénothiazine, est présent le composé non substitué, ainsi que le dérivé N-méthyl-, 2-phényl-, 2-méthoxy- et 2-acétyle.

**2.** Mélange de résine de réaction selon la revendication 1, caractérisée en ce que la résine époxy représente un éther glycidylique à base de Bisphénol A, de Bisphénol F ou de Novolaque, une résine époxy aliphatique linéaire ou une résine époxy cycloaliphatique.

**3.** Mélange de résine de réaction selon la revendication 1 ou 2, caractérisé en ce que l'initiateur du durcissement est un hexafluoroantimoniate de benzylthiolanium ou de naphtylméthylthiolanium.

**4.** Mélange de résine de réaction selon l'une quelconque des revendications 1 à 3, caractérisé en ce que la fraction de l'initiateur du durcissement représente de 0,01 à 5% en masse rapportés à la résine époxy.

**5.** Mélange de résine de réaction selon l'une quelconque des revendications 1 à 4, caractérisé en ce que le sensibilisateur est une benzophénone, en particulier la 4-phénylbenzophénone.

**6.** Mélange de résine de réaction selon l'une quelconque des revendications 1 à 4, caractérisé en ce que le sensibilisateur est une phénanthrènequinone, en particulier la phénanthrènequinone non substituée.

**7.** Mélange de résine de réaction selon l'une quelconque des revendications 1 à 4, caractérisé en ce que le sensibilisateur est une thioxanthone, en particulier la thioxanthone non substituée et la 2-isopropylthioxanthone.

**8.** Mélange de résine de réaction selon l'une quelconque des revendications 1 à 4, caractérisé en ce que le sensibilisateur est une phénothiazine, en particulier la N-méthylphénothiazine.

**9.** Mélange de résine de réaction selon l'une quelconque des revendications 1 à 8, caractérisé en ce que la fraction du sensibilisateur représente de 0,01 à 5% en masse rapportés à la résine époxy.

**10.** Mélange de résine de réaction selon l'une quelconque des revendications 1 à 9, caractérisé en ce qu'il contient un composé organique contenant des groupes hydroxyle, en particulier un polyoxyalkylènepolyol, un polyalkylènepolyol ou un composé hydroxylé cycloaliphatique, ou son éther vinylique.

**11.** Utilisation du mélange de résine de réaction selon une ou plusieurs des revendications 1 à 10, pour l'enduction ou le collage de composants ou de groupes de composants électroniques.